# EUROPÄISCHE PATENTSCHRIFT

(11) **EP 0 508 049 B1**
(45) Veröffentlichungstag und Bekanntmachung des Hinweises auf die Patenterteilung: **17.05.1995**
(21) Anmeldenummer: 92101400.7
(22) Anmeldetag: 29.01.1992
(51) Int. Cl.: B65G 51/26

(54) **Rohrpoststation**
Pneumatic tube station
Poste de courrier par tube

(30) Priorität: 09.04.1991 DE 4111474
(43) Veröffentlichungstag der Anmeldung: 14.10.1992
(73) Patentinhaber: TECHNO MARK AG, 6343 Rotkreuz (CH)
(72) Erfinder: Lang, Hartmut, D-73207 Plochingen (DE)
(74) Vertreter: Witte, Alexander, Dr.-Ing.

(56) Entgegenhaltungen:
- DE-A- 3 442 655
- FR-A- 2 220 446
- SOVIET PATENTS ABSTRACTS Section PQ, Week 8622, 13. Juni 1986 DerwentPublications Ltd., London, GB; Class Q35, AN 86-142640/22
- PATENT ABSTRACTS OF JAPAN vol. 5, no. 199 (M-102)(871) 17. Dezember 1981

## Beschreibung

Die Erfindung betrifft eine Rohrpoststation mit einer mit einem Fahrrohr fluchtenden Sende- und Empfangsposition für Rohrpostbüchsen und einer von der Sende- und Empfangsposition radial beabstandeten Bestückungs- und Entnahmeposition, mit einer Einrichtung zur Bewegung der Rohrpostbüchsen zwischen der Sende- und Empfangsposition und der Bestückungs- und Entnahmeposition, mit einer Hubvorrichtung zur axialen Verfahrung der Rohrpostbüchsen und mit Mitteln zum Ergreifen der Rohrpostbüchsen an einem ihrer axialen Enden.

Eine Rohrpoststation der vorstehend genannten Art ist aus der DE-U-89 04 558 bekannt.

Bei der bekannten Rohrpoststation werden ankommende Rohrpostbüchsen in einer vorbestimmten Horizontalebene abgebremst und angehalten, um dann in dieser Horizontalebene verfahren zu werden. In einer zweiten Position innerhalb der Horizontalebene werden die angekommenen Rohrpostbüchsen alsdann mittels einer Hubvorrichtung in vertikaler Richtung in eine zweite, höhere Horizontalebene verfahren. Hierzu wird eine Kolben-Zylinder-Anordnung verwendet, die unterhalb der ersten Horizontalebene angeordnet ist und deren Kolbenstange so lange ausgebildet ist, daß sie die Rohrpostbüchsen von der unteren, ersten Horizontalebene in die obere, zweite Horizontalebene zu verfahren vermag. In der zweiten Horizontalebene wird die angekommene Rohrpostbüchse an ihrem unteren axialen Ende arretiert. Von oben nähert sich nun ein Halter, der mittels einer zweiten Kolben-Zylinder-Einheit in vertikaler Richtung verfahrbar ist, die sich oberhalb der zweiten Horizontalebene befindet. Der Halter setzt von oben auf das obere axiale Ende der Rohrpostbüchse auf und ergreift dieses. Die Rohrpostbüchse der bekannten Rohrpoststation ist axial zweiteilig ausgebildet. Wird nun der Halter nach oben durch Einziehen der zweiten Kolben-Zylinder-Einheit verfahren, so nimmt der Halter die obere Hälfte der Rohrpostbüchse mit, während die untere Hälfte in der zweiten Horizontalebene verrastet bleibt.

Auf diese Weise wird bei der bekannten Rohrpoststation erreicht, daß angekommene Rohrpostbüchsen geöffnet werden und der Inhalt von einem Benutzer der Rohrpoststation entnommen werden kann. Die für das Ergreifen der Rohrpostbüchsen an ihren axialen Enden vorgesehenen Mittel dienen daher bei der bekannten Rohrpoststation ausschließlich dem Öffnungsvorgang, während die Rohrpostbüchse mit ihrem Inhalt während des Öffnungsvorganges nicht verfahren wird. Zum Verfahren der Rohrpostbüchsen dienen vielmehr ausschließlich die bereits erwähnte erste Kolben-Zylinder-Einheit sowie, in anderem Zusammenhang, die auf die Rohrpostbüchse einwirkende Schwerkraft.

Aus der SU-A-1 188 065 ist ferner eine um eine Vertikalachse verschwenkbare Hubeinrichtung für Rohrpostbüchsen bekannt geworden, die zwei in Vertikalrichtung verfahrbare Greifer zum Erfassen der Rohrpostbüchsen aufweist.

Auf dem Gebiet der Rohrposttechnik ist es darüber hinaus bekannt, Rohrpostanlagen als sogenannte "Schwerrohrpost" auszugestalten. Hierunter versteht man Rohrpostanlagen, in denen nicht nur in herkömmlicher Weise Dokumente, Banknoten, Arzneimittel und ähnliche verhältnismäßig leichte Gegenstände befördert werden sondern vielmehr Rohrpostanlagen, mit denen innerhalb einer Fertigungs- oder Montagestätte Maschinenelemente wie Schrauben, Bolzen, Kleinteile u. dgl. befördert werden. Die dabei beförderten Gewichte liegen eine bis zwei Größenordnungen über den Gewichten, wie sie mit herkömmlichen Rohrpostanlagen befördert werden. So sind Schwerrohrpost-Büchsen typischerweise 10 bis 20 kg schwer und werden mit Geschwindigkeiten zwischen 5 und 10 m/s befördert.

Das große Gewicht der dabei beförderten Rohrpostbüchsen bringt es mit sich, daß besondere mechanische Anforderungen an die Bauelemente der Rohrpostanlage gestellt werden. Dies gilt insbesondere für die Rohrpoststationen, d.h. diejenigen Punkte der Rohrpostanlage, in denen Rohrpostbüchsen aufgegeben, abgesendet, empfangen und entnommen werden.

Ein besonderes Problem ist dabei das Abbremsen von mit hoher Geschwindigkeit ankommenden Schwerrohrpostbüchsen. Die kinetische Energie derartiger Schwerrohrpostbüchsen ist nämlich so groß, daß Bauteile herkömmlicher Rohrpoststationen glatt durchschlagen würden. Aus diesem Grunde ist es bei Schwerrohrpostanlagen bekannt, ankommende Rohrpostbüchsen nicht nur in herkömmlicher Weise durch ein Luftpolster sondern darüber hinaus auch noch durch spezielle Stoßdämpfer abzubremsen, die am unteren Ende der Bewegungsbahn ankommender Rohrpostbüchsen in der Rohrpoststation angeordnet sind.

Diese Bauart von Rohrpoststationen für Schwerrohrpostanwendungen bringt es jedoch mit sich, daß Hubvorrichtungen für angekommene Rohrpostbüchsen nicht oder nur mit unverhältnismäßig hohem konstruktiven Aufwand unterhalb der Auftreffebene ankommender Rohrpostbüchsen angeordnet werden können. Derartige Hubvorrichtungen müßten nämlich so ausgelegt werden, daß sie die kinetische Energie der ankommenden Rohrpostbüchsen ganz oder zumindest teilweise aufnehmen können.

Andererseits sind Rohrpoststationen üblicherweise so ausgelegt, daß ankommende Rohrpostbüchsen in einem ersten Rohrstück der Rohrpoststation aufgenommen, dann durch Verfahren des Rohrstücks aus der Bewegungsbahn der ankommenden Rohrpostbüchsen verfahren und dann mittels einer Hubvorrichtung o. dgl. ausgegeben werden. Die Ankunftsposition für Rohrpostbüchsen in der Rohrpoststation muß dabei sehr schnell wieder freigemacht werden, weil aus Sicherheitsgründen die Aufnahme einer weiteren Rohrpostbüchse in schneller zeitlicher Folge möglich sein muß, wenn sich beispielsweise eine zweite Rohrpostbüchse durch einen Funktionsfehler der Rohrpostanlage auf dem Weg zur Rohrpoststation befindet.

Der Erfindung liegt daher die Aufgabe zugrunde, eine Rohrpoststation der eingangs genannten Art dahingehend weiterzubilden, daß in schneller zeitlicher Folge der Empfang von schweren Rohrpostbüchsen möglich ist, deren kinetische Energie durch einfache konstruktive Mittel in der Auftreffebene der Rohrpoststation abgefangen werden kann.

Diese Aufgabe wird erfindungsgemäß dadurch gelöst, daß die Mittel Teile der oberhalb einer Auftreffebene der Rohrpostbüchsen in der Rohrpoststation angeordneten Hubvorrichtung sind, und daß die Hubvorrichtung um eine zur Bestückungs- und Entnahmeposition parallele Vertikalachse verschwenkbar ist.

Die der Erfindung zugrunde liegende Aufgabe wird auf diese Weise vollkommen gelöst.

Die Anordnung der Hubvorrichtung oberhalb der Auftreffebene hat den Vorteil, daß die Auftreffebene selbst von Hubeinrichtungen frei ist und somit im Hinblick auf eine optimale Aufnahme ankommender Rohrpostbüchsen ausgelegt werden kann. Dies kann zum Beispiel durch Einbau eines geeigneten Stoßdämpfers geschehen. Die Hubvorrichtung ist von all dem nicht betroffen, weil sie sich oberhalb der Auftreffebene befindet. Dies reduziert auch die vertikale Bauhöhe der Anordnung und erspart vor allem Durchbrüche in Decken, wie sie bei herkömmlichen Rohrpoststationen mitunter erforderlich sind.

Dadurch, daß die Hubvorrichtung um eine zur Bestückungs- und Entnahmeposition parallele Vertikalachse verschwenkbar ist, liegt ein besonders einfacher Bewegungsablauf vor, der mit herkömmlichen Mitteln leicht realisiert werden kann. Ferner kann die ergriffene Rohrpostbüchse aus der Bestückungs- und Entnahmeposition durch Verfahren der Hubvorrichtung entweder zu einer entfernten Ausgabe oder einem weiteren Beförderungsmittel, beispielsweise einem Längsförderer, verbracht werden.

Bei einer besonders bevorzugten Ausgestaltung der Erfindung umfassen die Mittel einen mit einer ferromagnetischen Kopfplatte der Rohrpostbüchsen zusammenwirkenden Hubmagneten.

Diese Maßnahme hat den Vorteil, daß die Rohrpostbüchsen in besonders einfach steuerbarer Weise ergriffen werden können, weil es lediglich erforderlich ist, den Erregerstrom für den Hubmagneten ein- bzw. auszuschalten.

Bei einer alternativen Ausführungsform der Erfindung umfassen die Mittel einen mit einer Kopfplatte der Rohrpostbüchse zusammenwirkenden Saugkopf.

Diese Maßnahme hat den Vorteil, daß die Hubvorrichtung selbst verhältnismäßig leicht ausgebildet werden kann, weil ein Saugkopf im Prinzip lediglich eine Gummimanschette mit einer pneumatischen Unterdruckleitung erfordert.

Weiterhin kann bei einer noch anderen Alternative der Erfindung ein Greifer zum Ergreifen der Rohrpostbüchsen an einem axialen Ende eingesetzt werden, wobei der Greifer wiederum elektrisch oder fluidisch betätigt werden kann.

Bei einer bevorzugten Weiterbildung der Erfindung sind die Mittel am freien Ende eines von der Vertikalachse radial abstehenden Auslegers angeordnet, dessen Bewegungsbahn eine Entnahmeposition für angekommene Rohrpostbüchsen und mindestens einen Längsförderer schneidet.

Diese Maßnahme hat den Vorteil, daß durch einen extrem einfachen Bewegungsablauf eine Überführung einer angekommenen Rohrpostbüchse aus der Entnahmeposition auf einen Längsförderer möglich ist. Insbesondere ist auf diese Weise möglich, angekommene Rohrpostbüchsen durch einen schnell ablaufenden Bewegungsvorgang aus den Empfangselementen der Rohrpoststation zu entnehmen, so daß diese sogleich wieder frei für weitere ankommende Rohrpostbüchsen sind.

Weitere Vorteile ergeben sich aus der Beschreibung der beigefügten Zeichnung.

Ein Ausführungsbeispiel der Erfindung ist in der Zeichnung dargestellt und wird in der nachfolgenden Beschreibung näher erläutert. Es zeigen:
- Fig. 1: eine Seitenansicht, teilweise aufgebrochen, durch ein Ausführungsbeispiel einer erfindungsgemäßen Rohrpoststation;
- Fig. 2: eine äußerst schematisierte Schnittdarstellung in Richtung der Ebene II-II von Fig. 1.

In den Figuren ist mit 10 insgesamt eine Rohrpoststation bezeichnet, wie sie vorzugsweise für Schwerrohrpostanwendungen eingesetzt wird. Dabei werden verhältnismäßig schwere Maschinenteile, metallische Bauelemente u. dgl. aus einem zentralen Lager einer Fabrikations- oder Montagestätte mittels Rohrpost an einzelne Arbeitsplätze geschickt.

Die Rohrpoststation 10 umfaßt ein nur schematisch angedeutetes Gehäuse 11 mit einem stabilen Querboden 12, der sich in Horizontalebene erstreckt. Durch eine Decke 13 des Gehäuses 11 ist ein in vertikaler Richtung ankommendes Fahrrohr 14 hindurchgeführt, das an seinem unteren Ende in der Ebene des Querbodens 12 auf diesem mündet.

Auf einem Boden 15 des Gehäuses 11 ist eine insgesamt mit 20 bezeichnete Trommel drehbar angeordnet. Die Trommel 20 umfaßt eine obere Deckplatte 21 und eine untere, dazu parallele Deckplatte 22. Zwischen den Deckplatten 21, 22 erstrecken sich in vertikaler Richtung ein erstes Rohrstück 23 sowie ein zweites Rohrstück 24 in symmetrischer Anordnung zueinander zur Symmetrieachse der Trommel 20.

Die Trommel 20 ist vorzugsweise oben im Querboden 12 gelagert. Die untere Deckplatte 22 steht über eine Welle 25 mit einem Drehantrieb 26 in Verbindung, der auf dem Boden 15 angeordnet ist. Auf diese Weise ist eine Rotation der Trommel 20 um eine mit 27 bezeichnete erste Vertikalachse möglich, die zugleich die Symmetrieachse der Trommel 20 ist.

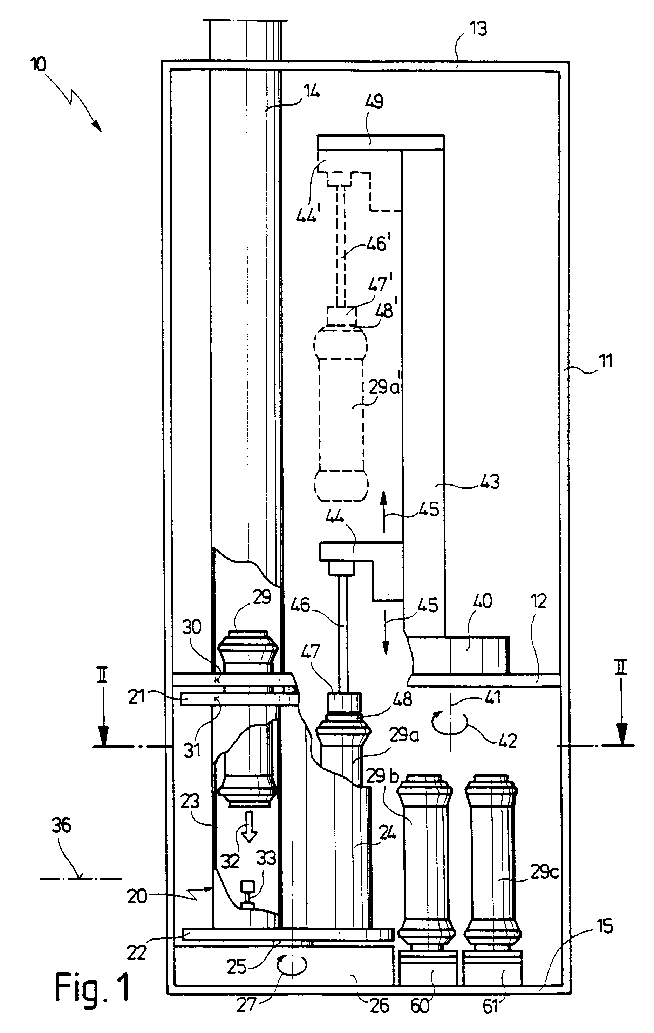

Mit 29 ist in den Figuren eine Rohrpostbüchse bezeichnet, die aus dem Fahrrohr 14 nach unten durch eine mit dem Fahrrohr 14 fluchtende Öffnung 30 im Querboden 12 hindurch, dann durch eine mit der ersten Öffnung 30 fluchtende zweite Öffnung 31 in der oberen Deckplatte 21 in das erste Rohrstück 23 gelangt, wie mit einem Pfeil 32 in Fig. 1 angedeutet.

Da die Rohrpostbüchse 29, wie erwähnt, vorzugsweise eine Schwerrohrpostbüchse ist, die mit hoher Geschwindigkeit und hoher Masse ankommt, ist auf der unteren Deckplatte 22 ein Stoßdämpfer 33 angeordnet, der die verbleibende kinetische Energie der Rohrpostbüchse 29 aufnimmt, soweit diese nicht bereits durch das Luftpolster zwischen Rohrpostbüchse 29 und unterer Deckplatte aufgefangen wurde.

Die in den Figuren linke Position der Trommel 20, d.h. die Position des ersten Rohrstücks 23 soll im folgenden als Sende-/Empfangsposition 34 bezeichnet werden, während die rechte Position des zweiten Rohrstücks 24 als Bestückungs-/Entnahmeposition 35 bezeichnet werden soll. Das erste Rohrstück 23 in der Sende-/Empfangsposition 34 dient nämlich nicht nur in der vorstehend beschriebenen Weise zum Empfangen ankommender Rohrpostbüchsen 29, es können vielmehr aus derselben Position auch die Rohrpostbüchsen 29 abgesendet werden, indem z.B. im Fahrrohr 14 ein Unterdruck eingestellt und zugleich ein Luftzugang in das erste Rohrstück 23 von der unteren Deckplatte 22 her ermöglicht wird, wie dies an sich bekannt ist.

Die in dem ersten Rohrstück 23 angekommene Rohrpostbüchse 29 kann nun durch Verdrehen der Trommel 20 in die Bestückungs-/Entnahmeposition 35 verbracht werden.

Um die Rohrpostbüchse, die in dieser Position in den Figuren mit 29a bezeichnet ist, nun aus der Trommel 20 zu entnehmen, ist eine Hub- und Entnahmevorrichtung vorgesehen.

Diese besteht aus einem auf dem Querboden 12 angeordneten Drehantrieb 40, der eine Bewegung um eine zweite Vertikalachse 41 ermöglicht, wie mit einem Pfeil 42 in Fig. 1 angedeutet.

Der Drehantrieb 40 umfaßt einen Vertikalarm 43, von dem radial ein Ausleger 44 absteht.

Der Ausleger 44 ist mittels einer Vertikal-Verfahreinheit in Richtung der Pfeile 45 an dem Vertikalarm 43 verfahrbar. Hierzu kann eine Spindel, eine Kolben-Zylinder-Einheit, ein Zahnriemen o. dgl. verwendet werden, wie dies an sich bekannt ist.

Am freien Ende des Auslegers 44 ist eine vertikal angeordnete Stange 46 befestigt, die nach unten vom Ausleger 44 absteht. An ihrem unteren Ende trägt die Stange 46 ein Greifelement, im dargestellten Beispielsfall einen Hubmagneten 47.

Der Hubmagnet 47 ist so angeordnet, daß er mit einer ferromagnetischen Kopfplatte 48 der Rohrpostbüchse 29a zusammenwirken kann.

Wenn der Ausleger 44 nach unten in die in Fig. 1 durchgezogen eingezeichnete Stellung verfahren wird, setzt der Hubmagnet 47 auf die Kopfplatte 48 auf oder nähert sich ihr hinreichend an. Wird nun der Hubmagnet 47 erregt, so ergreift er die Rohrpostbüchse 29a über deren Kopfplatte 48. Durch Verfahren des Auslegers 44 nach oben in die in Fig. 1 gestrichelt eingezeichnete Stellung, in der die Bezugszeichen jeweils mit einem Apostroph versehen sind, kann nun die Rohrpostbüchse 29a in die Position 29a' und damit aus der Trommel 20 heraus angehoben werden. Um den Verfahrweg des Auslegers 44 nach oben zu begrenzen, ist am oberen Ende des Vertikalarms 43 ein Anschlag 49 vorgesehen.

Aus den Figuren ist ferner erkennbar, daß auf dem Boden 15 der Rohrpoststation 10 zwei Rollenbahnen 60 und 61 angeordnet sind, auf der angekommene oder abzusendende Rohrpostbüchsen gespeichert werden können.

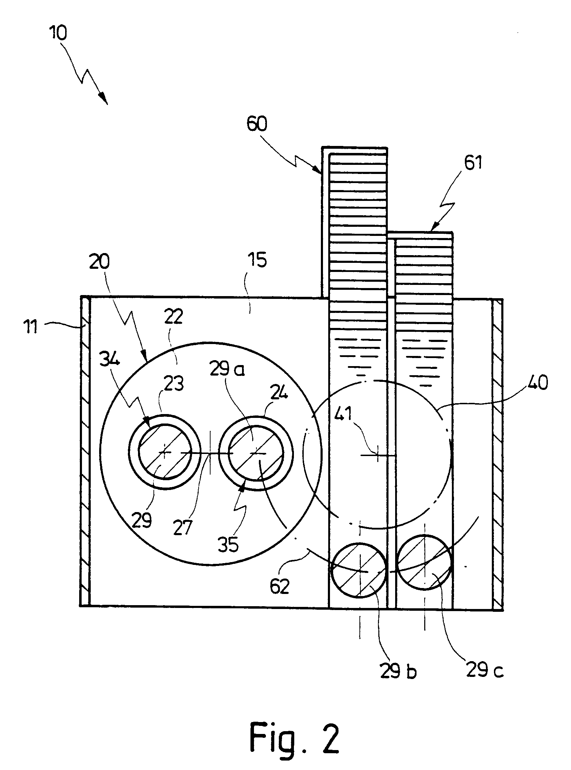

Wie deutlich aus Fig. 2 zu erkennen ist, verlaufen die Rollenbahnen 60, 61 im wesentlichen in tangentialer Richtung zur Trommel 20 und parallel zueinander. Die zweite Vertikalachse 41 des Drehantriebes 40 schneidet dabei die Rollenbahnen 60, 61, im dargestellten Ausführungsbeispiel schneidet die zweite Vertikalachse 41 die erste Rollenbahn 60.

Durch diese Anordnung ist es mit einfachem Bewegungsablauf möglich, eine angekommene Rohrpostbüchse 29a in der bereits beschriebenen Weise aus der Trommel 20 nach oben zu entnehmen und durch Verdrehen des Drehantriebes 40 sowie nachfolgendes Absenken auf eine der Rollenbahn 60 oder 61 abzusetzen, wie mit 29b, 29c in den Figuren dargestellt. Dies ist deswegen möglich, weil die Bewegungsbahn 62 des Zentrums der Rohrpostbüchsen 29a, 29b, 29c beim Verdrehen des Drehantriebes 40 sowohl die Bestückungs-/Entnahmeposition 35 wie auch die beiden Rollenbahnen 60, 61 schneidet.

Es versteht sich, daß der vorstehend beschriebene Bewegungsablauf in derselben Weise auch umgekehrt eingestellt werden kann, indem eine der Rollenbahnen 60, 61 für angekommene Rohrpostbüchsen und die jeweils andere Rollenbahn 60, 61 für zu bestückende Rohrpostbüchsen reserviert wird.

Wenn beispielsweise auf der ersten Rollenbahn 60 die angekommenen Rohrpostbüchsen 29b und auf der zweiten Rollenbahn 61 die zu bestückenden, d.h. abzusendenden Rohrpostbüchsen 29c gespeichert werden, so wird die oben beschriebene Hub- und Dreheinrichtung die angekommenen Rohrpostbüchsen jeweils auf der ersten Rollenbahn 60 absetzen, während abzusendende Rohrpostbüchsen von der zweiten Rollenbahn 61 entnommen und durch Rück-Drehen des Drehantriebes 40 in die Bestückungs-/Entnahmeposition 35 der Trommel 20 eingesetzt werden.

## Patentansprüche

1. Rohrpoststation mit einer mit einem Fahrrohr fluchtenden Sende- und Empfangsposition (34) für Rohrpostbüchsen (29) und einer von der Sende- und Empfangsposition (34) radial beabstandeten Bestückungs- und Entnahmeposition (35), mit einer Einrichtung (20) zur Bewegung der Rohrpostbüchsen (29) zwischen der Sende- und Empfangsposition (34) und der Bestückungs- und Entnahmeposition (35), mit einer Hubvorrichtung (43) zur axialen Verfahrung der Rohrpostbüchsen und mit Mitteln (46 bis 48) zum Ergreifen der Rohrpostbüchsen (29) an einem ihrer axialen Enden, dadurch gekennzeichnet, daß die Mittel (46 bis 48) Teile der oberhalb einer Auftreffebene (36) der Rohrpostbüchsen (29) in der Rohrpoststation (10) angeordneten Hubvorrichtung (43) sind und daß die Hubvorrichtung (43) um eine zur Bestückungs- und Entnahmeposition parallele Vertikalachse (41) verschwenkbar ist.

2. Rohrpoststation nach Anspruch 1, dadurch gekennzeichnet, daß die Mittel (46 bis 48) einen mit einer ferromagnetischen Kopfplatte (48) der Rohrpostbüchsen (29) zusammenwirkenden Hubmagneten (47) umfassen.

3. Rohrpoststation nach Anspruch 1, dadurch gekennzeichnet, daß die Mittel einen mit einer Kopfplatte der Rohrpostbüchse zusammenwirkenden Saugkopf umfassen.

4. Rohrpoststation nach Anspruch 1, dadurch gekennzeichnet, daß die Mittel einen mit einem axialen Ende der Rohrpostbüchsen zusammenwirkenden Greifer umfassen.

5. Rohrpoststation nach einem der vorhergehenden Ansprüche, dadurch gekennzeichnet, daß die Mittel (46 bis 48) am freien Ende eines von der Vertikalachse (41) radial abstehenden Auslegers (44) angeordnet sind, dessen Bewegungsbahn (62) eine Entnahmeposition (35) für angekommene Rohrpostbüchsen (29a) und mindetens einen Längsförderer (60, 61) schneidet.

## Claims

1. Pneumatic tube conveyor station, having a sending and receiving position (34) for pneumatic dispatch containers (29), which is aligned with a transmission tube, and an insertion and removal position (35) situated at a radial distance from the sending and receiving position (34), having a device (20) for moving the pneumatic dispatch containers (29) between the sending and receiving position (34) and the insertion and removal position (35), having a lifting apparatus (43) for axial displacement of the pneumatic dispatch containers and having means (46 to 48) of grasping the pneumatic dispatch containers (29) at one of their axial ends, characterized in that the means (46 to 48) are parts of the lifting apparatus (43) which is disposed above a landing plane (36) of the pneumatic dispatch containers (29) in the pneumatic tube conveyor station (10) and that the lifting apparatus (43) may be swivelled about a vertical axis (41) which is parallel to the insertion and removal position.

2. Pneumatic tube conveyor station according to claim 1, characterized in that the means (46 to 48) comprise a lifting magnet (47) which cooperates with a ferromagnetic top plate (48) of the pneumatic dispatch containers (29).

3. Pneumatic tube conveyor station according to claim 1, characterized in that the means comprise a suction head which cooperates with a top plate of the pneumatic dispatch container.

4. Pneumatic tube conveyor station according to claim 1, characterized in that the means comprise a gripper which cooperates with an axial end of the pneumatic dispatch containers.

5. Pneumatic tube conveyor station according to one of the preceding claims, characterized in that the means (46 to 48) are disposed at the free end of an extension arm (44), which projects radially from the vertical axis (41) and whose trajectory (62) cuts a removal position (35) for arrived pneumatic dispatch containers (29a) and at least one longitudinal conveyor (60, 61).

## Revendications

1. Station de poste pneumatique comprenant une position émettrice-réceptrice (34) alignée sur un tube de trafic pour des boîtes d'envoi de poste pneumatique (29) et une position de chargement et d'enlèvement (34) distante dans le sens radial de la position émettrice-réceptrice (34), un dispositif (20) destiné à mettre en mouvement les boîtes d'envoi de poste pneumatique (29) entre la position émettrice-réceptrice (34) et la position de chargement et d'enlèvement (35), un dispositif de levage (43) pour le déplacement axial des boîtes d'envoi de poste pneumatique, et des moyens (46 à 48) de saisie des boîtes d'envoi de poste pneumatique (29) à l'une de leurs extrémités axiales, caractérisée en ce que les moyens (46 à 48) sont des parties du dispositif de levage (43) placé dans la station de poste pneumatique (10) au-dessus d'un plan d'arrivée (36) des boîtes d'envoi de poste pneumatique (29), et en ce que le dispositif de levage (43) peut pivoter autour d'un axe vertical (41) parallèle à la position de chargement et d'enlèvement.

2. Station de poste pneumatique selon la revendication 1, caractérisée en ce que les moyens (46 à 48) comprennent un aimant de levage (47) agissant avec une plaque de tête ferromagnétique (48) des boîtes d'envoi de poste pneumatique (29).

3. Station de poste pneumatique selon la revendication 1, caractérisé en ce que les moyens comprennent une tête aspirante agissant avec une plaque de tête des boîtes d'envoi de poste pneumatique.

4. Station de poste pneumatique selon la revendication 1, caractérisée en ce que les moyens comprennent un préhenseur agissant avec une extrémité axiale des boîtes d'envoi de poste pneumatique.

5. Station de poste pneumatique selon l'une des revendications précédentes, caractérisée en ce que les moyens (46 à 48) sont disposés à l'extrémité libre d'un bras (44) distant dans le sens radial de l'axe vertical (41), bras dont la trajectoire de déplacement (62) coupe une position d'enlèvement (35) de boîtes d'envoi de poste pneumatique arrivées (29a) et au moins un convoyeur longitudinal (60, 61).
